# FASCICULE DE BREVET EUROPEEN

(11) **EP 2 002 164 B1**
(45) Date de publication et mention de la délivrance du brevet: **18.05.2011**
(21) Numéro de dépôt: 07731186.8
(22) Date de dépôt: 23.03.2007
(51) Int. Cl.: F16L 13/14

(54) **ACCESSOIRE SERTISSABLE DE RACCORDEMENT POUR CANALISATIONS**
ANQUETSCHBARES ROHRVERBINDUNGSZUBEHÖRTEIL
CRIMP-ON PIPE CONNECTION ACCESSORY

(30) Priorité: 29.03.2006 FR 0651091
(43) Date de publication de la demande: 17.12.2008
(73) Titulaire: Permaswage, 78340 Les Clayes Sous Bois (FR)
(72) Inventeur: HERAUD, Stéphane, F-75005 Paris (FR); BERNARDOT, Christian, F-78370 Plaisir (FR); LECROC, Daniel, F-78370 Plaisir (FR)
(74) Mandataire: Quantin, Bruno Marie Henri
(86) Numéro de dépôt international: PCT/FR2007/000498
(87) Numéro de publication internationale: WO 2007/110501

(56) Documents cités:
- WO-A-82/02755
- DE-A1- 19 609 257
- DE-A1- 19 925 024
- DE-C1- 4 111 279
- FR-A- 2 126 485
- NL-A- 8 203 087
- US-A- 3 572 779
- US-A- 4 371 199

## Description

L'invention concerne un accessoire pour le raccordement de canalisations, ce raccordement étant de préférence, mais pas nécessairement, démontable.

Un raccordement de ce type est notamment connu d'après le document US - 3 572 779 qui décrit un accessoire de raccordement formé de deux parties respectivement serties sur les extrémités de deux canalisations ; ces deux parties peuvent être solidaires l'une de l'autre ou reliées l'une à l'autre par vissage.

On connaît aussi le document WO - 82/02755, qui divulgue un accessoire comportant un manchon destiné à être fixé par sertissage à l'extrémité d'une première canalisation et un embout adapté à établir un raccordement avec un embout complémentaire monté à l'extrémité d'une autre canalisation ; ce document enseigne que ce manchon et cet embout aient des propriétés différentes de dureté (ou de malléabilité), c'est-à-dire que le manchon est suffisamment malléable pour permettre une fixation par sertissage, tandis que l'embout est suffisamment dur pour établir un affrontement efficace contre l'embout complémentaire pour une bonne étanchéité. Pour obtenir cette différence de propriétés mécaniques, plusieurs options sont proposées dans ce document, dont l'adoucissement de la partie manchon d'une pièce ayant initialement la dureté souhaitée pour l'embout, ou le durcissement de la partie embout d'une pièce ayant initialement la malléabilité souhaitée pour le manchon.

Le document US 4 371 199 décrit un exemple de joint serti utilisant une portion de tube encollée sans accessoire de raccordement comportant un manchon.

En pratique le manchon est serti à l'extérieur de l'extrémité de la canalisation à raccorder, et la géométrie de la surface extérieure de ce manchon est aménagée en sorte de résister à l'arrachement hors de cette extrémité (grâce par exemple à un profil longitudinal comportant une portion concave et une partie convexe) ainsi qu'à une rotation par rapport à cette extrémité (par exemple grâce à des méplats).

Toutefois, l'augmentation des performances demandées à de tels accessoires de raccordement conduit à rechercher sans cesse des améliorations, notamment en ce qui concerne la retenue en rotation de l'accessoire par rapport à la canalisation. Il faut noter ici que, lorsque cet accessoire est utilisé pour un raccordement par vissage, une éventuelle rotation de l'un des embouts par rapport à l'autre embout risque de détériorer la qualité du sertissage.

Il existe donc un besoin de mise au point d'un accessoire de raccordement pour canalisations (ou, en abrégé, un raccord) qui présente, dans des conditions de sertissage données vis-à-vis d'une canalisation donnée, une résistance améliorée du point de vue décohésion en rotation du manchon vis-à-vis de la canalisation.

Pour ce faire, plusieurs pistes peuvent être explorées.

C'est ainsi qu'on peut penser à multiplier les reliefs et les creux sur la partie manchon, pour améliorer l'accrochage. Toutefois, dans la mesure où ce manchon est réalisé, conformément à ce qu'a préconisé le document précité, en un matériau malléable, il en découle que ces reliefs et creux se déforment au moment du sertissage ; ces reliefs s'émoussent en conséquence, ce qui minimise l'effet d'accrochage de ces reliefs et de ces creux. L'augmentation de résistance à la décohésion par rotation ainsi obtenue est ainsi plutôt modeste.

Quant au principe d'augmenter l'amplitude des ondulations entre portions concaves et convexes, il n'est pas très efficace non plus, dans la mesure où le matériau constitutif du raccord, en particulier lorsque ce matériau est de l'aluminium pour des raisons de légèreté, ne subit souvent qu'un faible écrouissage, de sorte que l'augmentation de l'effort de sertissage augmente peu la pression radiale entre la canalisation et le raccord ; par contre, de telles ondulations peuvent détériorer la résistance du raccord en fatigue.

On peut aussi penser à déposer des particules abrasives fixes sur la surface du manchon qui est destinée à venir se sertir sur l'extrémité de la canalisation (ou en variante à l'intérieur de celle-ci). Toutefois, lorsque de telles particules sont suffisamment dures pour ne pas s'écraser lors du sertissage, leur dureté a comme inconvénient qu'elles risquent de provoquer l'apparition de fissures dans le manchon ou dans l'extrémité de la canalisation, d'où une dégradation sensible des performances en fatigue.

En fait, la variété des options d'aménagement des raccords pour en renforcer la tenue en rotation après sertissage est restreinte par le fait qu'on souhaite en pratique ne pas avoir à modifier (en tout cas de manière sensible) les conditions de montage de tels raccords ; en effet, ces conditions sont parfois déjà très contraignantes, notamment du point de vue accessibilité des canalisations, de sorte qu'il paraît exclu de compliquer davantage les conditions de sertissage des raccords).

L'invention a pour objet de proposer un accessoire de raccordement, ou raccord, présentant une résistance améliorée à la décohésion en rotation après sertissage à l'extrémité d'une canalisation (ou tube, tuyau, etc.), sans nuire aux autres performances mécaniques de l'ensemble serti, notamment en fatigue, et sans nécessiter une modification sensible des conditions de montage par sertissage d'un tel accessoire.

L'invention propose à cet effet un accessoire de raccordement pour canalisations, comportant un manchon destiné à être fixé par sertissage à une extrémité d'un tube de canalisation et destiné à coopérer au moins indirectement avec un autre élément de canalisation, caractérisé en ce que la surface du manchon qui est destinée à venir en contact de sertissage avec l'extrémité du tube comporte au moins une portion encollée comportant une colle à au moins deux composants dont l'un est encapsulé.

L'autre élément de canalisation peut être un autre tube de canalisation, ou un embout d'entrée ou de sortie de fluide, notamment.

On appréciera que l'invention propose ainsi d'utiliser une colle, alors que cela paraissait a priori incompatible avec l'exigence de ne pas modifier les conditions de montage du raccord ; en effet, il paraissait irréaliste de prévoir de demander à un opérateur chargé de monter un tel accessoire de procéder à un quelconque étalement d'une colle à la surface du manchon destiné à venir en contact avec l'extrémité de la canalisation, ou de surveiller que celle-ci est encore suffisamment fluide pour assurer un bon collage au moment du sertissage.

Toutefois, l'invention tire profit de ce qu'il existe des colles à plusieurs composants, dont l'un est encapsulé et ne vient donc en contact avec le reste de la colle qu'au moment de l'éclatement des capsules, donc au moment du sertissage, c'est-à-dire au moment où on souhaite procéder au collage. En outre, il existe parmi les colles comportant un composant encapsulé des colles polymérisables, c'est-à-dire des colles dont le durcissement est commandable par l'utilisateur, an moyen d'un apport d'énergie facile à prévoir lors d'une opération de sertissage (augmentation de température ou de pression, au encore génération d'un rayonnement UV, notamment). C'est pourquoi, selon une caractéristique préférée de l'invention, la colle utilisée est une colle polymérisable.

Mais on peut noter que l'activation par rayonnement UV implique une opération spécifique et peut ne pas être homogène au sein de la couche sertie, et que l'activation par la chaleur implique également une opération spécifique qui, si elle permet un effet plus homogène qu'un rayonnement UV, a toutefois l'inconvénient de risquer de modifier la structure cristallographique du raccord ou de l'extrémité de la canalisation : on comprend aisément que le choix d'une colle polymérisable par la pression est ici optimal, puisque le sertissage provoque ainsi, à la fois, l'éclatement des capsules et la mise en contact des composants de la colle, ainsi que l'activation de cette colle en vue de son durcissement. C'est pourquoi, selon une caractéristique préférée de l'invention, la colle polymérisable est polymérisable par application d'une pression.

Selon encore une autre caractéristique préférée de l'invention, la portion de surface qui est enduite de ladite colle est située à distance des extrémités du manchon, ce qui a l'avantage de laisser subsister, sur la surface du manchon destinée à être en contact avec l'extrémité de la canalisation, des portions extrêmes non encollées. Ces portions extrêmes non encollées contribuent à éviter que, lors du sertissage, de la colle ne risque de déborder ; en outre ces portions extrêmes présentent l'avantage de permettre la présence, en ce qui concerne l'extrémité libre de l'accessoire, d'un revêtement en un matériau tel que du téflon pour éviter le phénomène de fretting-corrosion, et pour l'extrémité du manchon située auprès de l'embout, d'un joint d'étanchéité.

Il n'y a avantageusement qu'une seule et unique portion encollée. En variante, on peut prévoir des portions encollées disjointes et décalées longitudinalement, mais le fait de prévoir une seule portion encollée permet de maximiser l'augmentation de performances mécaniques.

Notamment lorsque la surface du manchon qui est destinée à venir en contact de l'extrémité de la canalisation est la surface interne, cette portion encollée unique s'étend préférentiellement sur une distance axiale représentant entre 0,5D et D, si D est le diamètre de la surface portant cette portion encollée, de préférence entre 0,6D et 0,9D. En outre, cette portion encollée se situe avantageusement à une distance de l'extrémité libre de l'accessoire comprise entre 0,5D et D.

De manière également préférée, le manchon comporte, sur son autre surface radialement opposée à la surface comportant la portion encollée, une zone dont le profil longitudinal est ondulé, de manière à ce que le sertissage provoque des variations longitudinales de déformation, favorables à une bonne retenue axiale entre le manchon et l'extrémité de la canalisation. Avantageusement, cette zone ondulée admet au moins approximativement un plan transversal de symétrie, ce qui contribue à un sertissage homogène sur toute la longueur de la portion encollée. Selon une géométrie particulièrement simple tout en étant déjà efficace, cette zone ondulée est formée d'un bourrelet annulaire entre deux dépressions annulaires, ces dépressions étant en retrait par rapport au reste de ladite autre surface tandis que le bourrelet est avantageusement au même niveau, au moins approximativement, que ce reste de ladite autre surface, ce qui simplifie la fabrication de ce manchon. En variante, cette zone ondulée comporte deux bourrelets de part et d'autre d'une dépression.

Cette zone ondulée est avantageusement centrée longitudinalement sur la portion encollée, c'est-à-dire qu'elle admet un plan transversal central qui est sensiblement un plan transversal central pour la portion encollée aussi.

Le plan transversal central de la zone ondulée est de préférence située à une distance de l'extrémité libre de l'accessoire qui est comprise entre 0,5D et 1,5D, si D est le diamètre de la surface portant la portion encollée.

L'amplitude des ondulations de cette zone ondulée est avantageusement comprise entre de l'ordre de 1% à 10% du diamètre externe du manchon, typiquement de l'ordre de 5%.

De manière avantageuse, la portion encollée est globalement en retrait radialement par rapport à la surface du manchon de part et d'autre de cette portion encollée, ce qui contribue à un bon écrasement de la colle, sans étalement, lors du sertissage.

Le retrait de cette portion encollée est avantageusement de l'ordre d'un dixième de millimètre (par exemple entre 0,05 et 0,2 mm), ce qui permet la présence d'une couche de colle d'épaisseur significative sans que celle-ci vienne sensiblement en saillie vis-à-vis du reste de la surface dans laquelle est située cette portion encollée.

De manière particulièrement avantageuse, cette portion encollée comporte des collerettes en saillie. Celles-ci contribuent à maintenir en place la colle lors de l'application des efforts de sertissage. En outre, ces collerettes sont avantageusement en saillie sur une distance inférieure à la profondeur du retrait, de sorte que celles-ci sont en pratique recouvertes de la colle, ce qui garantit que, lors du sertissage, ia colle située sur ces collerettes est suffisamment écrasée pour que les capsules éclatent, que les composants de la colle entrent en contact et qu'un bon collage soit établi sur la circonférence de ces collerettes. Il mérite d'être noté qu'il n'est pas nécessaire que la colle située entre ces collerettes soit complètement écrasée et polymérisée ; en effet, l'existence, entre les zones de très bon collage (les collerettes), de zones de moindre tenue mécanique a pour avantage de conférer à l'ensemble serti une capacité à résister à des efforts tels que des efforts de flexion sans que les zones de très bon collage induisent des fissures.

Les collerettes sont avantageusement réparties de manière homogène sur toute la longueur de la portion encollée.

De manière avantageuse, la hauteur des collerettes en saillie est comprise entre un tiers et deux tiers de la profondeur du retrait de la portion encollée, de préférence de l'ordre de la moitié. Par ailleurs, la dimension longitudinale (ou largeur) des collerettes vaut avantageusement entre 10% et 30% (de préférence de l'ordre de 25%) du pas auquel ces collerettes se succèdent.

L'accessoire de raccordement peut n'être formé que par le manchon, lequel peut être conformé en sorte de pouvoir coopérer avec une pièce complémentaire capable d'établir une connexion avec un autre élément de canalisation (tube ou embout d'entrée/sortie d'un appareil, par exemple). Cet accessoire peut aussi comporter une portion solidaire du manchon qui est par exemple un embout adapté à être affronté à un embout complémentaire monté à l'extrémité de l'autre tube de canalisation ; cette portion peut aussi être un second manchon solidaire du premier et serti à l'extrémité de cet autre tube de canalisation.

Des objets, caractéristiques et avantages de l'invention ressortent de la description qui suit, donnée à titre d'exemple illustratif non limitatif, donnée en référence aux dessins annexés sur lesquels :
- la figure 1 est une vue en coupe axiale d'un accessoire de raccordement conforme à l'invention,
- la figure 2 est une vue agrandie du détail II de la figure 1,
- la figure 3 est une vue en coupe axiale partielle de l'accessoire après engagement sur une extrémité de canalisation avant sertissage,
- la figure 4 est une vue agrandie du détail IV de la figure 3,
- la figure 5 est une vue en coupe axiale partielle de l'accessoire après sertissage sur l'extrémité de la canalisation,
- la figure 6 est une vue agrandie du détail VI de la figure 5,
- la figure 7 est une vue en coupe axiale d'un autre accessoire, destiné à être fixé par sertissage axial,
- la figure 8 est une vue agrandie du détail VIII de cette figure 7,
- la figure 9 est une vue en coupe de l'accessoire des figures 7 et 8 après sertissage,
- la figure 10 est une vue en coupe axiale d'encore un autre accessoires, de raccordement, sur le point d'être serti sur l'extrémité d'un tube de canalisation,
- la figure 11 est une vue après sertissage, et
- la figure 12 est une vue du raccord de la figure 11, relié par vissage à un embout destiné à coopérer avec une extrémité d'un tube de canalisation.

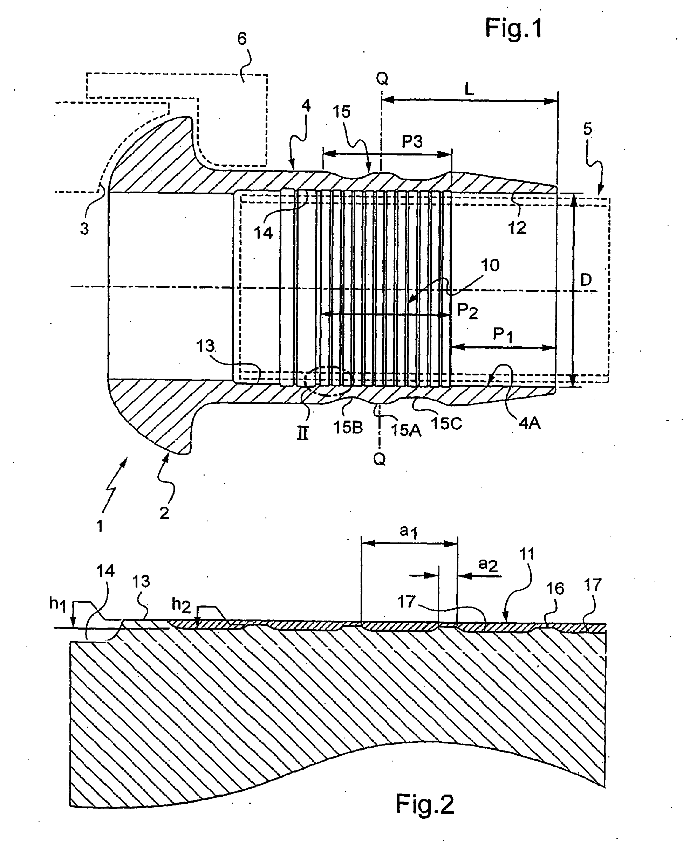

La figure 1 représente un accessoire de raccordement conforme à l'invention.

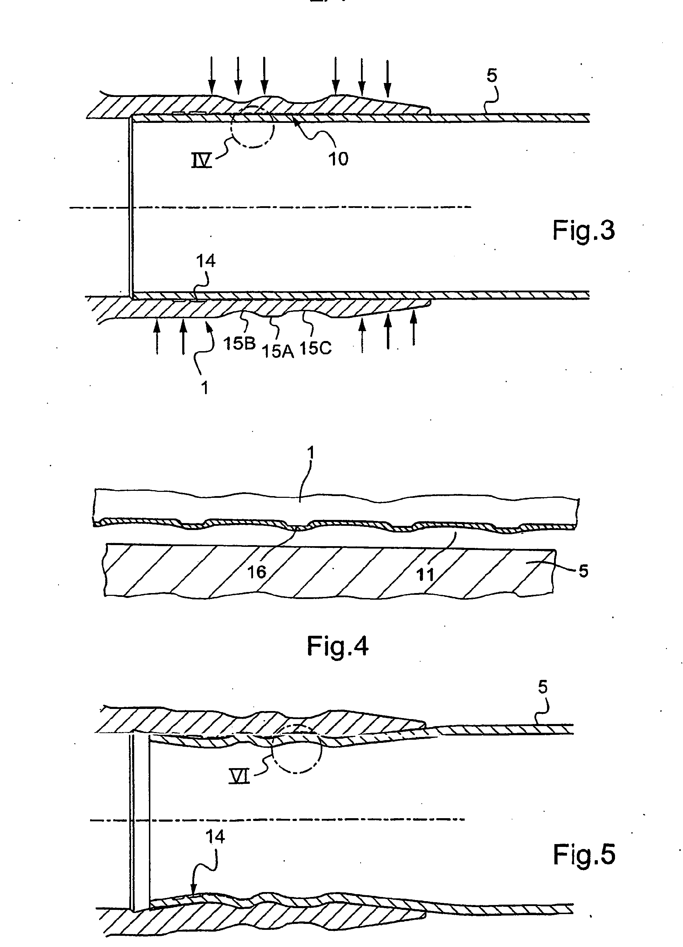

Plus précisément, cet accessoire, désigné sous la référence générale 1, comporte un embout 2 adapté à être affronté à un embout complémentaire (représenté en tiretés à la figure 1, sous la référence 3) et un manchon 4 destiné à être fixé par sertissage à l'extrémité d'une canalisation 5 (également en tiretés). Dans l'exemple représenté, l'embout 2 est un embout mâle tandis que l'embout 3 est un embout femelle, et le serrage des embouts l'un contre l'autre est assuré au moyen d'un écrou 6 (également en tirerés) ; par ailleurs, le sertissage est ici (voir aussi les figures 3 et 5) réalisé après engagement du manchon à l'extérieur de l'extrémité de la canalisation : la surface du manchon destinée à venir en contact avec cette extrémité est donc la surface interne du manchon, notée 4A. En variante non représentée, le manchon est serti à l'intérieur de l'extrémité de la canalisation (au lieu de sertissage « interne », l'homme de métier parle parfois de dudgeonnage).

Selon l'invention, cette surface 4A du manchon qui est destinée à venir en contact avec l'extrémité de canalisation 5 comporte une portion encollée 10, dont la dimension longitudinale est, à la figure 1, désignée par P2. Cette portion encollée est encollée par une colle (voir la référence 11 à la figure 2) à plusieurs composants dont l'un est encapsulé : de la sorte, tant que les capsules sont intactes, il n'y pas de contact entre les composants de la colle, et donc aucun durcissement. Il en résulte que l'enduction de l'accessoire peut être réalisée dès la fabrication de cet accessoire, indépendamment du temps qui s'écoulera ensuite avant montage par sertissage : cet accessoire enduit conserve sa capacité de collage pendant un éventuel stockage.

En pratique, les capsules dans lesquelles un composant d'une telle colle peut être confiné ont un diamètre de l'ordre de quelques centièmes de millimètres au plus.

De manière avantageuse, la colle est polymérisable, de sorte que son durcissement peut être provoqué, au moment choisi par l'opérateur. Parmi les colles polymérisables à au moins un composant encapsulé, l'invention préconise de choisir une colle dont la polymérisation est provoquée par la mise sous pression.

A titre d'exemple, la colle polymérisable à la pression et à plusieurs composants est une résine adhésive distribuée par la société 3M sous la dénomination « Scotch-Grip »® suivie par la référence 2353, ou la référence 2510 ; ce sont des adhésifs structuraux automobiles conçus pour bloquer des fixations vissées (ils sont déposés par enduction sur les filetages puis séchés en étuve). On peut noter qu'une telle fixation vissée correspond à un problème technique différent de celui visé par la présente invention : alors que le blocage d'une fixation vissée sert à rendre irréversible une connexion d'abord réversible, alors qu'un montage par sertissage est essentiellement irréversible ; en outre, le blocage de la connexion vissée consiste à empêcher un dévissage, c'est-à-dire l'inverse du mouvement de fixation, tandis que le collage lors du sertissage sert améliorer la tenue mécanique, axialement et circonférentiellement, après application d'efforts différents, à savoir des efforts radiaux.

Ainsi que cela ressort de la figure 1, la portion encollée 10 est avantageusement située à distance des extrémités du manchon, c'est-à-dire qu'il subsiste des portions latérales dénuées de colle. Pour ce qui est de la portion latérale de droite (portant la référence 12 et repérable par sa dimension axiale P1), celle-ci peut ainsi avoir été, lors de la fabrication de l'accessoire, enduite d'un matériau anti-frottement tel que du téflon, afin de minimiser après sertissage les phénomènes de fretting-corrosion. Quant à la portion latérale de gauche 13, située à proximité de l'embout, elle peut comporter une gorge 14 adaptée à recevoir, sans risquer de le(s) coller, un (ou des) joint(s) d'étanchéité (non représenté(s)).

La dimension longitudinale de la portion latérale extrême (P1) est en pratique inférieure à celle de la portion encollée (P2).

Dans le cas considéré où le manchon est serti sur l'extrémité de la canalisation, la dimension longitudinale de la portion encollée est avantageusement comprise entre 0,5D et D, si D est le diamètre externe du tube de canalisation à sertir, c'est-à-dire le diamètre interne du manchon. Le rapport entre ces dimensions est préférentiellement compris entre 0,6D et 0,9D ; dans l'exemple ici considéré d'un accessoire de diamètre interne de 19,05 mm, cette dimension P2 est de 13,25mm soit 0,70D. Quant à la dimension longitudinale P1 de la portion latérale extrême, elle est avantageusement comprise entre 0,5D et D; elle est, dans l'exemple ici considéré, de 10,5mm soit 0,55D.

Pour des raisons de simplicité de fabrication, l'accessoire comporte une seule portion encollées, mais l'accessoire peut, en variante, comporter plusieurs portions ainsi encollées (décalées axialement), pour, par exemple, éviter que l'assemblage serti soit trop rigide au point d'avoir notamment une flexibilité insuffisante. En fait, ainsi que cela sera détaillé en relation avec la figure 2, cet avantage peut être obtenu, sans avoir à délimiter de portions encollées multiples.

Pour assurer une bonne fixation axiale du fait du sertissage, et aussi pour assurer une bonne concentration de contrainte au sein de la portion encollée au moment du sertissage, ie manchon comporte avantageusement, sur sa surface opposée à celle dans laquelle est prévue la portion encollée, donc sur sa surface externe dans l'exemple de la figure 1, une zone 15, repérable par sa dimension longitudinale P3, dont le profil longitudinal est ondulé de sorte que le manchon présente localement des variations d'épaisseur. Ces ondulations sont avantageusement obtenues par une ou plusieurs dépressions dans l'épaisseur du manchon, c'est-à-dire que ces dépressions viennent en retrait par rapport au reste de la surface externe du manchon. En variante non représentée, il peut s'agir de saillies.

Cette zone ondulée 15 admet avantageusement, au moins approximativement, un plan transversal de symétrie noté Q.

Plus précisément, dans l'exemple ici considéré, cette zone ondulée est formée d'un bourrelet annulaire 15A disposé entre deux dépressions annulaires 15B et 15C, ce qui correspond à une géométrie particulièrement simple qui s'est toutefois révélée efficace.

De manière également avantageuse, cette zone ondulée 15 est centrée longitudinalement vis-à-vis de la portion encollée 10 située sur l'autre surface du manchon, ce qui veut dire que le plan Q est également, au moins approximativement, un plan de symétrie pour cette portion encollée.

Du point de vue dimensionnel, ce plan Q est avantageusement situé à une distance de l'extrémité libre du manchon qui est comprise entre 0,5D et 1,5D. Dans l'exemple de dimensions défini ci-dessus, la dimension P1 vaut entre 0,90D et D, plus précisément 0,92D, soit 17,5 mm.

Le choix de l'amplitude des ondulations est à la portée de l'homme de métier, en fonction du matériau constitutif du manchon (ici un alliage d'aluminium du type 6061), ainsi que des conditions du futur sertissage. Cette amplitude est par exemple comprise entre 1% et 10% du diamètre D (typiquement de l'ordre de 5%).

Ainsi que le montre plus particulièrement la figure 2, la portion encollée est en retrait par rapport à la surface des portions latérales encadrant cette portion encollée. C'est dans cette portion qu'est disposée la couche de colle 11 comportant un composant encapsulé, en remplissant totalement ou seulement en partie cette portion en retrait. La profondeur de cette portion en retrait, notée h1 à la figure 2 est en pratique choisie en sorte de permettre l'accumulation de plusieurs couches de capsules contenant le composant encapsulé ; elle est en pratique de l'ordre du dixième de millimètre, de préférence entre 0,05 et 0,2 mm.

De manière avantageuse, cette portion en retrait comporte des collerettes 16 en saillie par rapport aux creux 17 adjacents. Ces collerettes ont avantageusement une hauteur inférieure à la profondeur de la portion en retrait, c'est-à-dire que la dimension h2 de la figure 2 est inférieure à h1.

De manière préférée, cette hauteur h2 vaut entre un et deux tiers de h1, de préférence la moitié.

Par ailleurs ces collerettes ont une largeur significative, c'est-à-dire que, lors du sertissage, la colle qui recouvre ces collerettes est efficacement écrasée sans fluer vers les creux adjacents. De manière préférée, cette largeur, notée a2 à la figure 2 vaut entre 10% et 30% (ici 25%) du pas auquel se succèdent les collerettes ; ces collerettes sont en effet avantageusement réparties de manière régulière ou homogène (c'est-à-dire périodique). Ce pas vaut de préférence entre 5% et 10% du diamètre interne du manchon, par exemple 5%. Le nombre de ces collerettes est avantageusement supérieur à 10, ici de l'ordre de 12.

On appréciera que la présence des collerettes a pour conséquence qu'un bon collage est réalisé dès lors que les capsules de la colle sont au moins écrasées au sommet de ces collerettes. En outre, le fait que les capsules puissent ne pas être aussi nombreuses à être écrasées dans les creux peut avoir l'avantage de conférer à la colle située dans ces creux d'être moins bien polymérisée que sur les collerettes et donc de constituer des zones de collage moins rigides, ce qui peut conférer à l'assemblage serti une certaine flexibilité. Il est à noter que cette alternance de zones de collage plus ou moins fort apporte des avantages comparables au cas où il y aurait plusieurs portions encollées disjointes, sans avoir à surmonter les difficultés de réalisation de telles portions encollées disjointes.

On peut noter que, comme divers accessoires déjà connus, l'extrémité libre du manchon est effilée.

Les figures 3 et 4 représentent un accessoire conforme aux figures 1 et 2 sur le point d'être serti sur l'extrémité d'une canalisation ou plus généralement d'un tube quelconque.

Le manchon de l'accessoire y est disposé autour de cette extrémité, et on observe sur la figure 4 que la couche de colle présente des ondulations du fait qu'elle suit les collerettes et les creux formant la portion encollée.

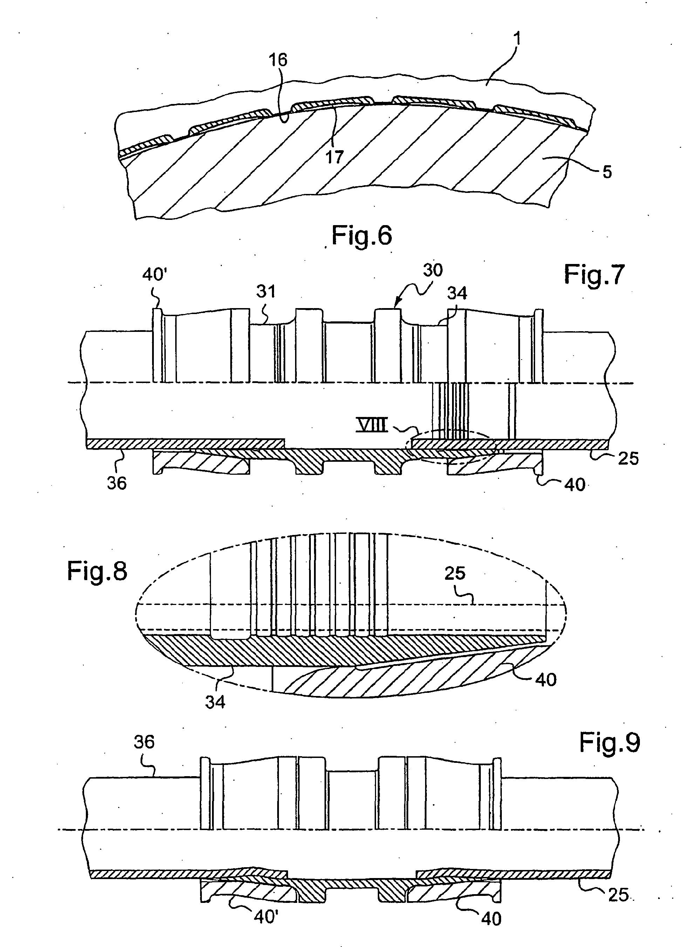

Les figures 5 et 6 représentent l'ensemble de la figure 3 après sertissage.

Le profil de la zone ondulée externe s'est atténué, tandis que sont apparues des ondulations sur la surface interne du manchon ainsi que dans l'extrémité de la canalisation. Cela contribue à une bonne retenue axiale de cette extrémité dans le manchon.

En ce qui concerne la portion encollée, on observe que la couche de colle a été très écrasée au sommet des collerettes (elle n'apparaît plus sur la figure 6), tandis que la colle peut ne même pas avoir été écrasée dans les creux. Ceci est un cas extrême, car dans la pratique, on constate que la colle est également écrasée (donc polymérisée) dans les creux, mais moins que sur les collerettes.

Les figures 7 à 9 représentent un autre accessoire de raccordement désigné par la référence 30, adapté à être serti sur l'extrémité d'une canalisation 25 d'un quelconque type.

Cet accessoire se distingue de celui des figures précédentes par le fait que le manchon 34 se prolonge par un autre manchon 31, qui en est solitaire. On peut noter que le sertissage, au lieu d'être exercé radialement comme dans le cas des figures précédentes, est réalisé axialement par poussée d'un poinçon annulaire 40 vers la gauche le long du manchon 34 (ou par la poussée vers la droite d'un poinçon 40' en ce qui concerne le manchon 31). La présence d'une portion encollée avec une colle à au moins deux composants dont l'un est encapsulé, apporte également un supplément de tenue mécanique, notamment en torsion, pour chaque manchon ainsi encollé (on comprend aisément qu'il est avantageux que chaque manchon soit encollé).

A titre d'ordre de grandeur, par rapport à un accessoire de base classique, par exemple conforme aux dessins du document WO - 82/02755 (sans la moindre colle et une simple dépression sur la surface opposée à la surface venant en contact avec l'extrémité de canalisation) présentant une résistance en torsion définissant un indice de référence 100 :
- la présence de la colle préconisée, surtout dans le cas d'une portion en retrait, apporte un supplément de résistance d'environ 50% à 100% de l'indice de référence,
- la présence d'un revêtement d'accrochage connu, un complément de l'ordre de 100% de l'indice de référence,
- la présence d'un bourrelet central apporte un autre supplément de l'ordre de 100% de l'indice de référence,
- la présence des collerettes, conformément aux figures 1 et 2 apporte encore un autre supplément de l'ordre de 50% à 100%, soit une résistance finale valant 400% à 500% de l'indice de référence, ce qui correspond à une très nette amélioration par rapport à la résistance de l'accessoire classique.

Dans l'exemple ici considéré d'un raccord en alliage d'aluminium de type 6061 serti sur un tube en aluminium de taille 12/16^{ème} de pouce (soit environ 1.90 cm), aucune décohésion n'a été constatée pour des contraintes de 60 N.m, voire supérieures.

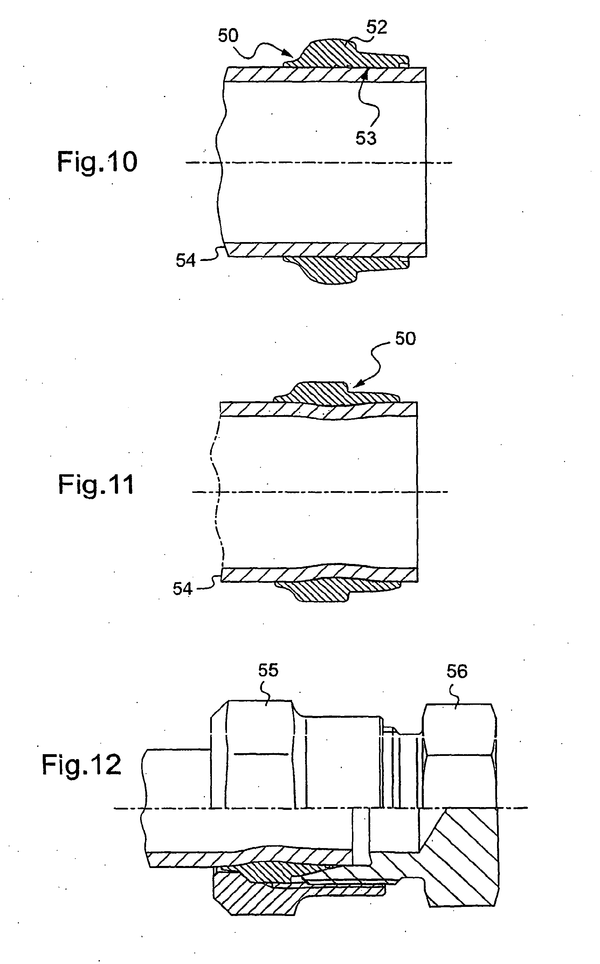

Les figures 10 à 12 représentent un troisième mode de réalisation de l'invention. Ces figures représentent un accessoire de raccordement 50 principalement formé d'un manchon, lequel présente extérieurement une portion convexe en saillie 52, et une portion encollée 53 (voir la figure 10). Celle-ci est sertie sur l'extrémité d'un tube de canalisation 54 (voir la figure 11), puis assemblée par vissage d'une pièce formant écrou 55 sur un embout de raccordement 56, par exemple adapté à se monter sur un embout d'entrée/sortie d'un appareil à fluide, ou sur un embout monté à l'extrémité d'un autre tube de canalisation.

Les pièces constitutives de l'accessoire de l'invention sont en pratique des pièces métalliques (tels qu'en aciers inoxydables, en alliages d'aluminium, en titane ou en l'un de ses alliages, en cuivre ou en l'un de ses alliages, notamment). Le manchon et l'embout peuvent être, selon les besoins, en des matériaux métalliques de compositions identiques ou au contraire différentes.

## Revendications

1. Accessoire (1, 30) de raccordement pour canalisations, comportant un manchon (4, 34) destiné à être fixé par sertissage à une extrémité d'un tube de canalisation et destiné à coopérer au moins indirectement avec un autre élément de canalisation, **caractérisé en ce que** la surface (4A) du manchon qui est destinée à venir en contact de sertissage avec l'extrémité du tube comporte au moins une portion encollée (10) comportant une colle à au moins deux composants dont l'un est encapsulé.

2. Accessoire selon la revendication 1, **caractérisé en ce que** la colle est polymérisable.

3. Accessoire selon la revendication 2, **caractérisé en ce que** la colle est polymérisable par mise sous pression.

4. Accessoire selon l'une quelconque des revendications 1 à 3, **caractérisé en ce que** la portion encollée est à distance des extrémités du manchon.

5. Accessoire selon l'une quelconque des revendications 1 à 4, **caractérisé en ce que** la portion encollée (10) est unique.

6. Accessoire selon la revendication 5, **caractérisé en ce que** la portion encollée est située à une distance de l'extrémité libre du manchon, à l'opposé de l'embout, comprise entre 0,5D et D environ, si D est le diamètre de la surface du manchon dans laquelle est prévue cette portion encollée.

7. Accessoire selon la revendication 5 ou la revendication 6, **caractérisé en ce que** la portion encollée a une dimension longitudinale comprise entre 0,5D et D, si D est le diamètre de la surface du manchon dans laquelle est prévue cette portion encollée.

8. Accessoire selon la revendication 7, **caractérisé en ce que** la dimension longitudinale de la portion encollée est comprise entre 0,6D et 0,9D.

9. Accessoire selon l'une quelconque des revendications 1 à 4 **caractérisé en ce que** cet accessoire comporte plusieurs portions encollées décalées axialement.

10. Accessoire selon l'une quelconque des revendications 1 à 9, **caractérisé en ce que** le manchon comporte, sur sa surface opposée à celle comportant la portion encollée (10), une zone (15) dont le profil longitudinal est ondulé.

11. Accessoire selon la revendication 10, **caractérisé en ce que** cette zone ondulée (15) admet au moins approximativement un plan transversal de symétrie (Q).

12. Accessoire selon la revendication 11, **caractérisé en ce que** ce plan transversal de symétrie est situé à une distance de l'extrémité libre du manchon qui est comprise entre 0,5D et 1,5D, si D est le diamètre de la surface opposée comportant la portion encollée.

13. Accessoire selon la revendication 11 ou la revendication 12, **caractérisé en ce que** cette zone ondulée est formée d'un bourrelet (15A) annulaire entre deux dépressions annulaires (15B, 15C).

14. Accessoire selon l'une quelconque des revendications 10 à 14, **caractérisé en ce que** cette zone ondulée est centrée longitudinalement sur la portion encollée de la surface opposée.

15. Accessoire selon l'une quelconque des revendications 10 à 15, **caractérisé en ce que** l'amplitude des ondulations de cette zone ondulée est comprise entre de l'ordre de 1% à 10% du diamètre de la surface comportant cette zone ondulée.

16. Accessoire selon l'une quelconque des revendications 1 à 15, **caractérisé en ce que** la portion encollée (10) est en retrait radialement par rapport à la surface du manchon de part et d'autre de cette portion encollée.

17. Accessoire selon la revendication 16, **caractérisé en ce que** le retrait est de l'ordre du dixième de millimètre.

18. Accessoire selon la revendication 16 ou la revendication 17, **caractérisé en ce que** la portion en retrait (10) comporte des collerettes en saillie (16).

19. Accessoire selon la revendication 18, **caractérisé en ce que** ces collerettes ont une hauteur (h2) inférieure au retrait (h1).

20. Accessoire selon la revendication 19, **caractérisé en ce que** la hauteur des collerettes vaut entre un tiers et deux tiers du retrait.

21. Accessoire selon la revendication 20, **caractérisé en ce que** la hauteur des collerettes vaut environ la moitié du retrait.

22. Accessoire selon l'une quelconque des revendications 18 à 21, **caractérisé en ce que** les collerettes sont réparties de manière périodique.

23. Accessoire selon la revendication 22, **caractérisé en ce que** la dimension longitudinale des collerettes (a2) vaut entre 10% et 30% du pas (a1) auquel ces collerettes se succèdent.

24. Accessoire selon la revendication 23, **caractérisé en ce que** la dimension longitudinale des collerettes vaut environ le quart de ce pas.

25. Accessoire selon l'une quelconque des revendications 1 à 24, **caractérisé en ce qu'**il est principalement constitué par ledit manchon.

26. Accessoire selon l'une quelconque des revendications 1 à 24, **caractérisé en ce qu'**il comporte en outre une portion solidaire de ce manchon destinée à coopérer au moins indirectement avec un autre tube de canalisation.

27. Accessoire selon la revendication 26, **caractérisé en ce que** cette portion solidaire est un second manchon destiné à être serti sur une extrémité de cet autre tube de canalisation.

28. Accessoire selon la revendication 26, **caractérisé en ce que** cette portion solidaire est un embout destiné à être affronté à un embout complémentaire monté sur ledit autre tube de canalisation.

## Claims

1. Connection accessory (1, 30) for pipes, including a sleeve (4, 34) adapted to be crimped to one end of a pipe tube and adapted to cooperate at least indirectly with another pipe element, **characterized in that** the surface (4A) of the sleeve that is adapted to come into crimping contact with the end of the tube includes at least one portion (10) coated with adhesive, comprising an adhesive having at least two components one of which is encapsulated.

2. Accessory according to claim 1, **characterised in that** the adhesive is polymerizable.

3. Accessory according to claim 2, **characterised in that** the adhesive is polymerizable by applying pressure.

4. Accessory according to any one of claims 1 to 3, **characterised in that** the portion coated with adhesive is at a distance from the ends of the sleeve.

5. Accessory according to any one of claims 1 to 4, **characterised in that** there is only one portion (10) coated with adhesive.

6. Accessory according to claim 5, **characterised in that** the portion coated with adhesive is at a distance from the free end of the sleeve, facing the fitting, from approximately 0.5D to approximately D, where D is the diameter of the surface of the sleeve including the portion coated with adhesive.

7. Accessory according to claim 5 or claim 6, **characterised in that** the portion coated with adhesive has a longitudinal dimension from 0.5D to D, where D is the diameter of the surface of the sleeve including the portion coated with adhesive.

8. Accessory according to claim 7, **characterised in that** the longitudinal dimension of the portion coated with adhesive is from 0.6D to 0.9D.

9. Accessory according to any one of claims 1 to 4, **characterised in that** it includes a plurality of axially offset portions coated with adhesive.

10. Accessory according to any one of claims 1 to 9, **characterised in that** the sleeve has an area (15) with a corrugated longitudinal profile on its surface opposite that including the portion (10) coated with adhesive.

11. Accessory according to claim 10, **characterised in that** this corrugated area (15) has at least approximately a transverse plane (Q) of symmetry.

12. Accessory according to claim 11, **characterised in that** this transverse plane of symmetry is at a distance from the free end of the sleeve that is from 0.5D to 1.5D, where D is the diameter of the opposite surface including the portion coated with adhesive.

13. Accessory according to claim 11 or claim 12, **characterised in that** this corrugated area is formed of an annular bead (15A) between two annular depressions (15B, 15C).

14. Accessory according to any one of claims 10 to 13, **characterised in that** this corrugated area is centered longitudinally on the portion of the opposite surface coated with adhesive.

15. Accessory according to any one of claims 10 to 14, **characterised in that** the amplitude of the corrugations in this corrugated area is from the order of 1% to the order of 10% of the diameter of the surface including this corrugated area.

16. Accessory according to any one of claims 1 to 15, **characterised in that** the portion (10) coated with adhesive is set back radially relative to the surface of the sleeve on either side of this portion coated with adhesive.

17. Accessory according to claim 16, **characterised in that** the setting back distance is of the order of one tenth of a millimeter.

18. Accessory according to claim 16 or claim 17, **characterised in that** the set back portion (10) includes projecting collars (16).

19. Accessory according to claim 18, **characterised in that** these collars have a height (h2) less than the setting back distance (h1).

20. Accessory according to claim 19, **characterised in that** the height of the collars has a value from one third to two thirds of the setting back distance.

21. Accessory according to claim 20, **characterised in that** the height of the collars has a value of approximately half the setting-back distance.

22. Accessory according to any one of claims 18 to 21, **characterised in that** the collars are distributed periodically.

23. Accessory according to claim 22, **characterised in that** the longitudinal dimension (a2) of the collars has a value from 10% to 30% of the pitch (a1) of the collars.

24. Accessory according to claim 23, **characterised in that** the longitudinal dimension of the collars has a value of approximately one quarter of said pitch.

25. Accessory according to any one of claims 1 to 24, **characterised in that** it consists primarily of said sleeve.

26. Accessory according to any one of claims 1 to 24, **characterised in that** it further includes a portion fastened to this sleeve intended to cooperate at least indirectly with another pipe tube.

27. Accessory according to claim 26, **characterised in that** this fastened on portion is a second sleeve adapted to be crimped to an end of this other pipe tube.

28. Accessory according to claim 26, **characterised in that** this fastened-on portion is a fitting intended to locate against a complementary fitting mounted on said other pipe tube.

## Patentansprüche

1. Verbindungszubehörteil (1, 30) für Rohrleitungen, umfassend eine Muffe (4, 30), die dazu bestimmt ist, durch Quetschverbindung an einem Ende eines Rohrleitungsrohrs befestigt zu werden, und die dazu bestimmt ist, wenigstens indirekt mit einem anderen Rohrleitungselement zusammenzuwirken, **dadurch gekennzeichnet, dass** die Fläche (4A) der Muffe, die dazu bestimmt ist, in Quetschverbindung mit dem Ende des Rohrs zu kommen, wenigstens einen mit Klebstoff beschichteten Teil (10) umfasst, der einen Klebstoff mit wenigstens zwei Komponenten umfasst, von denen eine eingekapselt ist.

2. Zubehörteil gemäß Anspruch 1, **dadurch gekennzeichnet, dass** der Klebstoff polymerisierbar ist.

3. Zubehörteil gemäß Anspruch 2, **dadurch gekennzeichnet, dass** der Klebstoff durch Anwendung von Druck polymerisierbar ist.

4. Zubehörteil gemäß einem der Ansprüche 1 bis 3, **dadurch gekennzeichnet, dass** der mit Klebstoff beschichtete Teil zu den Enden der Muffe beabstandet ist.

5. Zubehörteil gemäß einem der Ansprüche 1 bis 4, **dadurch gekennzeichnet, dass** der mit Klebstoff beschichtete Teil (10) einmalig ist.

6. Zubehörteil gemäß Anspruch 5, **dadurch gekennzeichnet, dass** der mit Klebstoff beschichtete Teil sich in einem Abstand zum freien Ende der Muffe, auf der dem Ansatzstück entgegengesetzten Seite befindet, zwischen etwa 0,5D und D umfasst, wenn D der Durchmesser der Fläche der Muffe ist, an der dieser mit Klebstoff beschichtete Teil angeordnet ist.

7. Zubehörteil gemäß Anspruch 5 oder Anspruch 6, **dadurch gekennzeichnet, dass** der mit Klebstoff beschichtete Teil eine Längsabmessung hat, die zwischen 0,5D und D umfasst, wenn D der Durchmesser der Fläche der Muffe ist, an der dieser mit Klebstoff beschichtete Teil angeordnet ist.

8. Zubehörteil gemäß Anspruch 7, **dadurch gekennzeichnet, dass** die Längsabmessung des mit Klebstoff beschichteten Teils zwischen 0,6D und 0,9D ist.

9. Zubehörteil gemäß einem der Ansprüche 1 bis 4, **dadurch gekennzeichnet, dass** dieses Zubehörteil mehrere mit Klebstoff beschichtete Teile umfasst, die axial versetzt sind.

10. Zubehörteil gemäß einem der Ansprüche 1 bis 9, **dadurch gekennzeichnet, dass** die Muffe an ihrer Fläche, die der gegenüberliegt, die den mit Klebstoff beschichteten Teil (10) umfasst, eine Zone (15) umfasst, deren Längsprofil gewellt ist.

11. Zubehörteil gemäß Anspruch 10, **dadurch gekennzeichnet, dass** diese gewellte Zone (15) wenigstens annähernd eine transversale Symmetrieebene (Q) zulässt.

12. Zubehörteil gemäß Anspruch 11, **dadurch gekennzeichnet, dass** diese transversale Symmetrieebene in einem Abstand zum freien Ende der Muffe angeordnet ist, der zwischen 0,5D und 1,5D beträgt, wenn D der Durchmesser der Fläche ist, die derjenigen gegenüberliegt, die den mit Klebstoff beschichteten Teil umfasst.

13. Zubehörteil gemäß Anspruch 11 oder Anspruch 12, **dadurch gekennzeichnet, dass** diese gewellte Zone von einem ringförmigen Wulst (15A) zwischen zwei ringförmigen Vertiefungen (15B, 15C) gebildet wird.

14. Zubehörteil gemäß einem der Ansprüche 10 bis 14, **dadurch gekennzeichnet, dass** diese gewellte Zone auf dem mit Klebstoff beschichteten Teil der gegenüberliegenden Fläche längszentriert ist.

15. Zubehörteil gemäß einem der Ansprüche 10 bis 15, **dadurch gekennzeichnet, dass** die Amplitude der Wellungen dieser gewellten Zone in der Größenordnung von 1 % bis 10 % des Durchmessers der Fläche, die diese gewellte Zone aufweist, liegt.

16. Zubehörteil gemäß einem der Ansprüche 1 bis 15, **dadurch gekennzeichnet, dass** der mit Klebstoff beschichtete Teil (10) bezüglich der Fläche der Muffe einerseits und andererseits dieses mit Klebstoff beschichteten Teils radial vertieft ist.

17. Zubehörteil gemäß Anspruch 16, **dadurch gekennzeichnet, dass** die Vertiefung in der Größenordnung eines Zehntel Millimeters liegt.

18. Zubehörteil gemäß Anspruch 16 oder Anspruch 17, **dadurch gekennzeichnet, dass** der vertiefte Teil (10) vorspringende Kragen (16) umfasst.

19. Zubehörteil gemäß Anspruch 18, **dadurch gekennzeichnet, dass** die Kragen eine Höhe (h2) haben, die geringer als die der Vertiefung (h1) ist.

20. Zubehörteil gemäß Anspruch 19, **dadurch gekennzeichnet, dass** die Höhe der Kragen zwischen einem Drittel und zwei Drittel der Vertiefung beträgt.

21. Zubehörteil gemäß Anspruch 20, **dadurch gekennzeichnet, dass** die Höhe der Kragen ungefähr die Hälfte der Vertiefung ausmacht.

22. Zubehörteil gemäß einem der Ansprüche 18 bis 21, **dadurch gekennzeichnet, dass** die Kragen in periodischer Art verteilt sind.

23. Zubehörteil gemäß Anspruch 22, **dadurch gekennzeichnet, dass** die Längsabmessung der Kragen (a2) zwischen 10 % und 30 % des Abstands (a1) beträgt, in dem diese Kragen aufeinander folgen.

24. Zubehörteil gemäß Anspruch 23, **dadurch gekennzeichnet, dass** die Längsabmessung der Kragen ungefähr ein Viertel dieses Abstands beträgt.

25. Zubehörteil gemäß einem der Ansprüche 1 bis 24, **dadurch gekennzeichnet, dass** es hauptsächlich aus der Muffe besteht.

26. Zubehörteil gemäß einem der Ansprüche 1 bis 24, **dadurch gekennzeichnet, dass** es außerdem einen fest mit dieser Muffe verbundenen Teil umfasst, der dazu bestimmt ist, wenigstens indirekt mit einem anderen Rohrleitungsrohr zusammenzuwirken.

27. Zubehörteil gemäß Anspruch 26, **dadurch gekennzeichnet, dass** dieser fest verbundene Teil eine zweite Muffe ist, die dazu bestimmt ist, auf ein Ende dieses anderen Rohrleitungsrohrs gequetscht zu werden.

28. Zubehörteil gemäß Anspruch 26, **dadurch gekennzeichnet, dass** dieser fest verbundene Teil ein Ansatzstück ist, das dazu bestimmt ist, an ein anderes komplementäres Ansatzstück, das auf dem anderen Rohrleitungsrohr montiert ist, angefügt zu werden.
